(19) **Europäisches Patentamt**
**European Patent Office**
**Office européen des brevets**

(11) Veröffentlichungsnummer : **0 030 654**
**B1**

(12) **EUROPÄISCHE PATENTSCHRIFT**

(45) Veröffentlichungstag der Patentschrift :
**13.06.84**

(51) Int. Cl.³ : **G 09 G   1/04, G 09 G   1/16**

(21) Anmeldenummer : **80107334.7**

(22) Anmeldetag : **25.11.80**

(54) **Verfahren zur Beseitigung des Zwischenzeilenflimmerns bei der Darstellung von alphanumerischen Zeichen und graphischen Symbolen auf einem Bildschirm eines Monitors sowie Schaltungsanordnung zur Durchführung des Verfahrens.**

(30) Priorität : **06.12.79 DE 2949020**

(43) Veröffentlichungstag der Anmeldung :
**24.06.81 Patentblatt 81/25**

(45) Bekanntmachung des Hinweises auf die Patenterteilung : **13.06.84 Patentblatt 84/24**

(84) Benannte Vertragsstaaten :
**AT BE CH DE FR GB IT LI LU NL SE**

(56) Entgegenhaltungen :
**IBM TECHNICAL DISCLOSURE BULLETIN, Band 21, Nr. 1, Juni 1978, New York, US J.E.R. YOUNG: "Variable spaced alphanumeric display", Seiten 379-380**
**MULLARD TECHNICAL COMMUNICATIONS, Band 13, Nr. 126, April 1975, Mullard Ltd, Mitcham GB, J.R. KINGHORN: "Character rounding for alphanumeric video display", Seiten 230-239**
**INSTITUTE OF ELECTRICAL AND ELECTRONICS ENGINEERS, Nerem Record, Band 15, 6-8, November 1973, Newton, US, H.C. HENDRICKSON: "Digital TV graphics", Seiten 39-46**

(73) Patentinhaber : **LOEWE OPTA GMBH**
**Industriestrasse 11 Postfach 220**
**D-8640 Kronach (DE)**

(72) Erfinder : **Motschmann, Gerd**
**Hauptstrasse 29**
**D-8621 Mitwitz (DE)**
Erfinder : **Schaas, Gerhard**
**Sonnenleite 11**
**D-8633 Rödenthal (DE)**

## Beschreibung

Die Erfindung betrifft ein Verfahren zur Beseitigung des Zwischenzeilenflimmerns bei der Darstellung von alphanumerischen Zeichen und graphischen Symbolen auf einem Bildschirm eines Monitors, insbesondere eines Fernsehempfangsgerätes, bei dem ein Bild nach dem Halbzeilenverfahren im Zeilensprungraster durch zwei nacheinander geschriebene Halbbilder mit je einer Anzahl von $k + 1/2$ Zeilen dargestellt wird, indem durch Vertikalversatz das zweite Halbbild mit dem ersten zur Deckung gebracht wird, sowie eine Schaltungsanordnung zur Durchführung des Verfahrens.

Beim Fernsehen werden nach dem Zeilensprungverfahren zwei Halbbilder durch periodisch wechselnden Versatz des Tasters um eine Zeilenbreite mit einer Bildwechselfrequenz von 50 Halbbildern pro Sekunde (CCIR-Norm) durchlaufen. Das entsprechende Zeilensprungraster wird beim Halbzeilenverfahren, bei welchem bei jedem Teilbild den ganzen Zeilen eine halbe hinzugerechnet wird, durch Verkettung der Horizontal- und Vertikalfrequenz bestimmt. Durch das Halbzeilenverfahren ergeben sich zwischen Horizontal- und Vertikalsynchronisation verschiedene Phasenlagen bei den einzelnen Halbbildern. Der Vertikalrückschlag muß deshalb phasenverschoben für die beiden Halbbilder versetzt erfolgen.

Bedingt durch das Zeilensprungverfahren tritt bei der Darstellung von nicht beweglichen alphanumerischen Zeichen und graphischen Symbolen ein nicht erwünschtes Zwischenzeilenflimmern auf, da die Konturen von Teilbild zu Teilbild um je eine Zeile versetzt werden. Bei einigen Datensichtgeräten tritt ein Zwischenzeilenflimmern nicht auf, da das Zwischenzeilenverfahren für die Anzeige der Daten hier nicht eingesetzt wird. Fernsehempfangsgeräte sind jedoch primär für den Empfang von Signalen nach dem Halbbildverfahren ausgelegt. Bei der Darstellung von alphanumerischen Zeichen und graphischen Symbolen durch die modernen Fernsehmedien, wie Teletext, Viewdata, und auch durch die Verwendung der Fernsehschirme als Datensichtgeräte für die Heimcomputer und Fernsehspiele wirkt sich das Zeilensprungverfahren bei der Darstellung der Symbole besonders negativ aus. Das Zwischenzeilenflimmern ist hier unvermeidlich und wirkt besonders störend, wenn der Zuschauer in einem geringen Abstand zum Fernsehschirm sitzt, was beim Ablesen von kleinen Schriftzeichen und anderen Kleinsymbolen unerläßlich ist.

Aus der DE-A-27 37 166 ist ein Verfahren und eine Schaltungsanordnung bei einem Fernsehbildempfänger zur abschaltbaren Unterdrückung der Zeilenzwischenlage bekannt, bei dem durch Überlagerung der Vertikal- und Horizontalsynchronimpulse erreicht wird, daß zwei Halbbilder zu je 312 Zeilen übereinandergeschrieben werden, wobei die Bildwechselfrequenz von 50 Hz unter Zugrundelegung des Fernsehsystems nach CCIR mit 625 Zeilen und 25 Bildwechseln pro Sekunde beibehalten wird, eine Zeile jedoch praktisch ausgetastet wird. Durch die Maßnahme des Übereinanderschreibens zweier Halbbilder von je 312 Zeilen wird eine flimmerfreie Wiedergabe von alphanumerischen Zeichen und Grafiken gewährleistet. Gleichzeitig lehrt die DE-OS, die Überlagerung der Vertikal- und Horizontalsynchronisierimpulse derart vorzunehmen, daß bei Empfang einer normalen Fernsehsendung mit analogen Signalen die Synchronisation des Vertikaloszillators ausschließlich durch die empfangenen Vertikalsynchronisierimpulse erfolgt.

Ein Gerät, das ebenfalls die Übereinanderschreibung je eines Halbbildes mit 312 Zeilen ermöglicht, ist auch im « NTZ-Kurier », 5/72, auf den Seiten K 93 und ff. beschrieben. Des weiteren ist in den « Technischen Mitteilungen » von AEG-Telefunken, 66, 1976, 2/3 auf den Seiten 116 und ff. ein Bildschirmbaustein beschrieben, mit dessen Hilfe ebenfalls die Vertikalsynchronisation im Fernsehgerät derart verändert wird, daß zwei Halbbilder mit einer Anzahl von 312 Zeilen übereinandergeschrieben werden.

Gleiche Verfahren und Schaltungsanordnungen sind auch beschrieben in « Rundfunktechnische Mitteilungen », Jahrgang 23, 1979, Heft 1, Seite 20, Spalte 1, sowie in der DE-B-27 34 714, Spalte 6, Absatz 2. Des weiteren hat H.H. Schüßler in einem Vortrag auf ein gleiches Verfahren verwiesen (« Leistungsmerkmale, Systemkonfiguration u. Schaltungstechnik für Bildschirmtexteinrichtungen, Symposium in München, 12. bis 15.6.78 « Kommunikation und Demokratie »).

Aus der Firmenmitteilung IBM Technical Disclosure Bulletin, Band 21, Nr. 1, Juni 1978, Seiten 379 bis 380, ist eine Schaltungsanordnung bekannt, mittels der die auf dem Bildschirm dargestellten Zeichen in vertikaler Richtung vergrößert und wahlweise plaziert werden können. In Abhängigkeit der in einer Zählschaltung gezählten Zeilen werden die graphischen Zeichen über eine Steuerlogik wahlweise in verschiedenen Rastern dargestellt. Die Größenänderung und Plazierung erfolgt dabei stets in Abhängigkeit von den gezählten Zeilen, wobei die Synchronisation entweder auf 682 oder 455 Zeilen erfolgt. Parallel dazu wird ein Charaktergenerator gesteuert, der entsprechend der gewählten Zeilenzahl die einzelnen Zeichen zuordnet.

Zur Vermeidung des Zwischenzeilenflimmerns bei der Darstellung von alphanumerischen Zeichen ist es aus der Firmenschrift Mullard Technical Communications, Band 13, Nr. 126, April 1975, Seiten 230 bis 239, bekannt, die Vertikalsynchronisation bei der Darstellung mittels eines 312/313 Zeilenzählers (625 Zeilenbild) ganzzeilig zu steuern. Die Synchronisation kann auch auf 312 1/2 Zeilen verändert werden. Der Ablenkgenerator wird also folglich stets unterschiedlich synchronisiert.

In einem Aufsatz in der Schrift Institute of Electrical and Electronics Engineers, Nerem Record, Band 15, 6-8, November 1973, Seiten 39 bis 46, ist das Problem des Zwischenzeilenflimmerns ebenfalls angesprochen. Als mögliche Lösung wird eine höhere Bildwechselfrequenz vorgeschlagen.

Alle bekannten Verfahren haben in Bezug auf 625 Zeilenfernsehbilder eines gemeinsam, daß sie über die Veränderung der Vertikalsynchronisation zwei identische Halbbilder mit 312 bzw. 313 Zeilen schreiben und für die Synchronisationsänderungen durch Verknüpfung der Vertikal- und Horizontalimpulse sich von Halbbild zu Halbbild gegenüber empfangenen Synchronimpulsen ändernde Vertikalsynchronimpulse erzeugen. Diese steuern die Vertikalendstufen. Ferner ist eine Änderung der Synchronisation in dem Moment notwendig, wenn eine normale Fernsehsendung empfangen wird. Die sich durch die Synchronisationsänderungen ergebenden Schwierigkeiten bei der Beherrschung der Umladungen der Koppelkondensatoren des Vertikaloszillators sind ersichtlich und technisch außerordentlich schwierig zu handhaben.

Es hat sich deshalb gezeigt, daß nur mit einem erhöhten technischen Aufwand eine einwandfreie Synchronisation derart sichergestellt ist, daß tatsächlich die Halbbilder mit vollen Zeilen übereinandergeschrieben werden.

Ausgehend von dem bekannten Stand der Technik liegt der Erfindung die Aufgabe zugrunde, mittels eines anderen Verfahrens und geeigneter Maßnahmen das lästige Zwischenzeilenflimmern bei der Darstellung von alphanumerischen Zeichen und graphischen Symbolen zu vermeiden, ohne daß die Vertikalsynchronisation von Halbbild zu Halbbild geändert werden muß. Die Synchronisation, die bei Empfang von normalen Fernsehsendungen gegeben ist, soll beibehalten werden, bzw. durch die Erfindung sollen die aufgezeigten Nachteile der bekannten Verfahren vermieden werden sowie ein einfacherer Schaltungsaufwand gegeben sein.

Die Aufgabe wird erfindungsgemäß beim Gegenstand der Erfindung durch ein Verfahren gemäß dem Anspruch 1 gelöst.

Vorteilhafte Weiterbildungen des Verfahrens sowie bevorzugte Schaltungsausführungen zur Durchführung des Verfahrens sind in den Unteransprüchen beschrieben.

Das erfindungsgemäße Verfahren beruht darauf, durch geeignete Zusatzschaltungen den Bildlagestrom durch Aufstockung bzw. Verringerung von einem Halbbild zum anderen derart zu verändern, daß beim Schreiben eines Halbbildes mit k + 1/2 Zeilen die Halbbilder deckungsgleich geschrieben werden.

Bevorzugte Weiterbildungen der Erfindung sowie Schaltungen zur Durchführung des Verfahrens sind in den Unteransprüchen beschrieben.

In der modernen Wiedergabetechnik von alphanumerischen Zeichen und graphischen Symbolen bedient man sich eines Character Rounding Generators, der anhand von eingegebenen Digitalwerten zur Darstellung von bogenförmigen Konturen Ergänzungssignale zu den Zwischenzeilen-Bildformationen erzeugt und diese den dargestellten Signalen aufaddiert, so daß die Außenkontur des dargestellten Zeichens einheitlich erscheint. Der Schaltmäander, der zur Ansteuerung des Character Rounding Generators intern erzeugt wird, kann in vorteilhafter Weise für das versetzte Durchlaufen des zweiten Halbbildes als Schaltimpuls direkt verwendet werden. Der Character Rounding Generator muß jedoch bei dem erfindungsgemäßen Verfahren außer Betrieb gesetzt werden, da sonst Verfälschungen in den Darstellungen der alphanumerischen Zeichen und graphischen Symbole auftreten würden.

Ein Character Rounding Generator ist im Valvo-Handbuch, 1978, Seite 159 und ff. beschrieben. Aufgrund des komplizierten Aufbaus der verwendeten integrierten Schaltkreise wird auf eine detaillierte Beschreibung verzichtet.

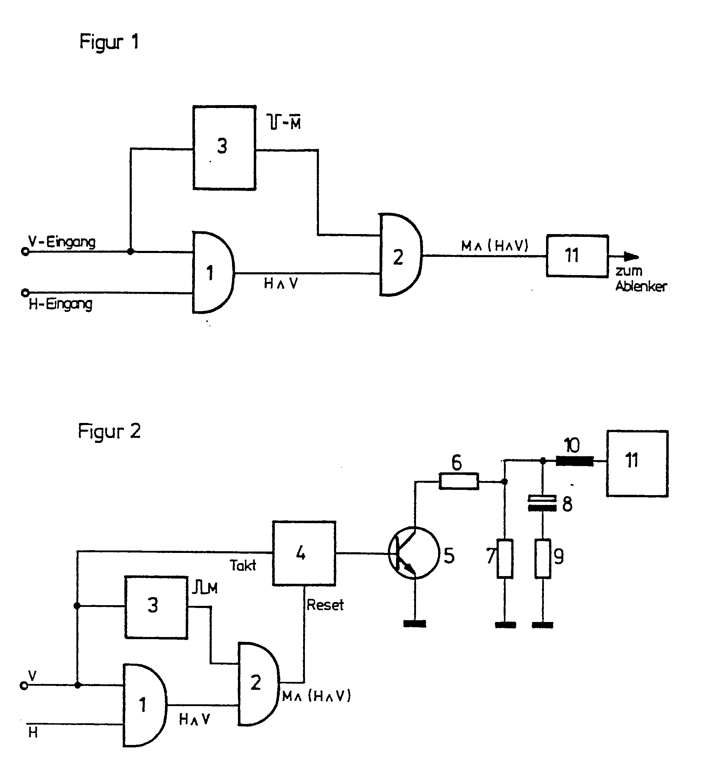

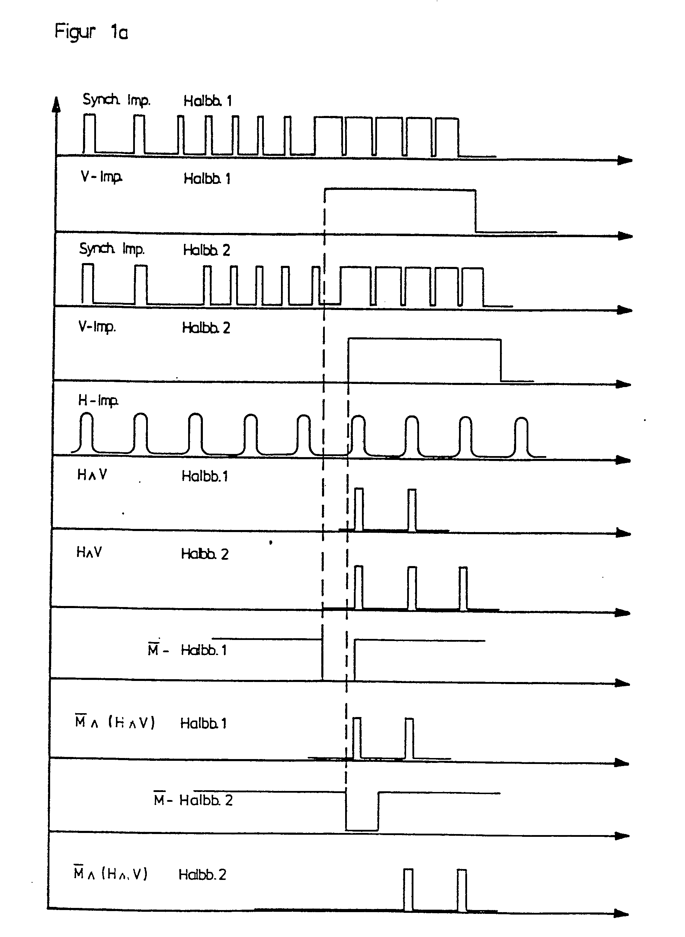

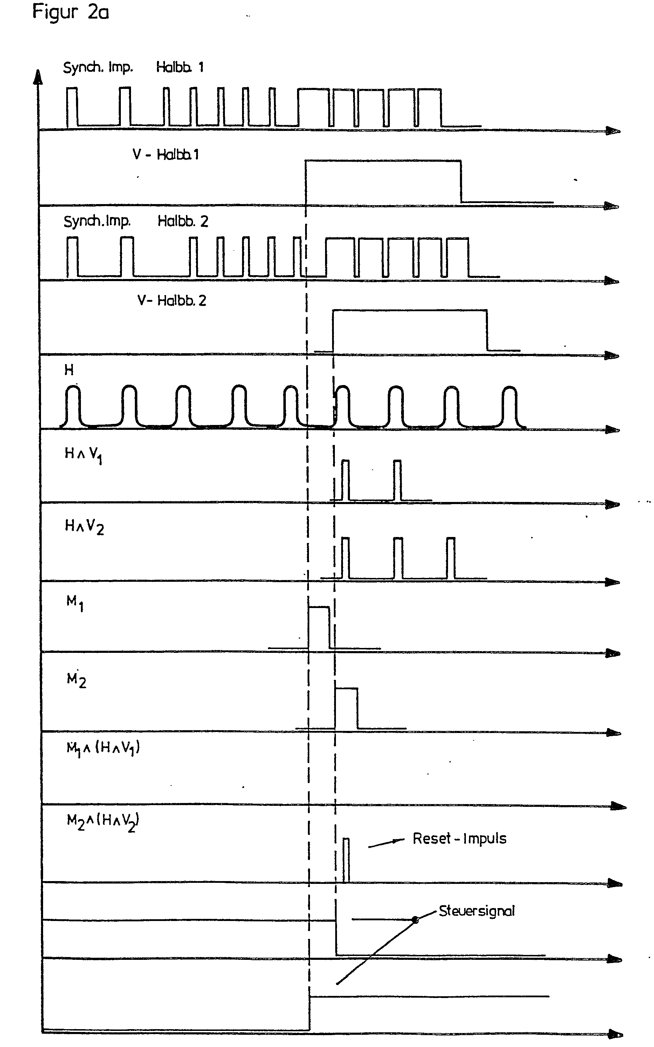

Die Erfindung wird nachfolgend anhand des in Fig. 1 dargestellten Ausführungsbeispiels unter Zuhilfenahme der in Fig. 2 dargestellten Impulsdiagramme näher beschrieben.

Im Ausführungsbeispiel in Fig. 1 mit dem entsprechenden Impulsdiagramm in Fig. 2 ist eine erfindungsgemäß ausgebildete Schaltungsanordnung zur Durchführung des Verfahrens dargestellt, bei der durch die logische Verknüpfung der Vertikal- und Horizontalfrequenzen ein Impuls zur Ansteuerung der Steuerschaltung erzeugt wird. Die Schaltung besteht aus einen UND-Gatter 1 und einem zweiten UND-Gatter 2, einer Monoflop-Schaltung 3, die einen Fensterimpuls erzeugt. Gestartet wird die Monoflop-Schaltung 3 durch die Vertikalimpulse V, die gleichzeitig an einem Eingang des ersten UND-Gatters 1 anliegen. Am zweiten Eingang liegen die Horizontalimpulse H an, die UND-Verknüpfung ist im Impulsdiagramm ebenfalls dargestellt. Der Ausgang des zweiten UND-Gatters ist mit dem Reset-Eingang einer Flip-Flop-Schaltung 4 verbunden, die von den Vertikalimpulsen V getaktet wird. Ausgangsseitig ist die Flip-Flop-Schaltung 4 mit einem Steuertransistor 5 verbunden und steuert diesen in Abhängigkeit der anliegenden Steuersignale. In Reihe zum Steuertransistor 5 ist ein Widerstand 6 geschaltet, der im leitendgesteuerten Zustand des Transistors 5 parallel zum Widerstand 7 geschaltet wird, wodurch der Bildlagestrom verändert wird. Parallel zum Widerstand 7 sind ein Kondensator 8 und in Reihe hierzu ein Widerstand 9 geschaltet, der mit dem zweiten Pol an Masse liegt. Am Verknüpfungspunkt ist die Vertikalablenkspule 10 angeschaltet, die am Vertikalendverstärker 11 angeschlossen ist. Während des ersten Halbbildes durchfließt ein bestimmter Bildlagestrom die Ablenkspule 10. Die Größe dieses Bildlagestromes wird durch den Widerstand 7 bestimmt. Während des zweiten Halbbildes würde derselbe Bildlagestrom die Ablenkspule 10 durchfließen, durch die Ansteuerung jedoch die Zwischenzeilen durchlaufen werden. Erfindungsgemäß wird nun parallel zu dem den Bildlagestrom bestimmenden Widerstand 7 während des Durchlaufens des zweiten Halbbildes ein Widerstand 6 parallelgeschaltet und damit der Bildlagestrom derart verändert, daß die Zeilen des zweiten Halbbildes zur Deckung mit den Zeilen des ersten Halbbildes gelangen. Die Ansteuerung erfolgt, wie in den Impulsdiagrammen in Fig. 2 erkenntlich, mittels der Schaltungsanordnung folgendermaßen.

Durch die Verknüpfung der Vertikal- und Horizontalimpulse mittels UND-Gatter 1 und 2 mit einem Fensterimpuls M, der vom Monoflop 3 erzeugt wird, erhält man am Ausgang des Gatters 2 einen Impuls im Ganzzeilenbildabstand, der eindeutig einem bestimmten Halbbild zugeordnet ist. Dieser Impuls wird zum Zurücksetzen eines mit einem Vertikaltakt umgeschalteten Flip-Flops 4 verwendet. Somit ist das Ausgangssignal ein im Halbbildabstand umgeschalteter Schaltmäander, der in seiner Phasenlage durch den Resetimpuls eindeutig definiert ist. Mit diesem Schaltmäander wird während jedes zweiten Halbbildes ein Strom durch die Vertikalablenkspulen zugeschaltet, der eine Verschiebung der Bildlage derart bewirkt, daß Zeichnungsgleichheit der beiden Halbbilder erreicht wird. Die entsprechenden Steuersignale zur Ansteuerung des Schalttransistors 5 sind in den letzten beiden Zeilen des Impulsdiagramms dargestellt.

**Ansprüche**

1. Verfahren zur Beseitigung des Zwischenzeilenflimmerns bei der Darstellung von alphanumerischen Zeichen und graphischen Symbolen auf einem Bildschirm eines Monitors, insbesondere eines Fernsehempfangsgerätes, bei dem ein Bild nach dem Halbzeilenverfahren im Zeilensprungraster durch zwei nacheinander geschriebene Halbbilder mit je einer Anzahl von k + 1/2 Zeilen dargestellt wird, indem durch Vertikalversatz das zweite Halbbild mit dem ersten zur Deckung gebracht wird, dadurch gekennzeichnet, daß nach dem Schreiben des ersten Halbbildes mit k + 1/2 Zeilen mit Einleiten des Vertikalrücklaufs eine Steuerschaltung angesteuert wird, über die der vertikale Bildlagestrom derart verändert wird, daß die Zeilen (k + 1/2) des zweiten Halbbildes zur Deckung mit den Zeilen des ersten Halbbildes gelangen.

2. Schaltungsanordnung für die Durchführung eines Verfahrens nach Anspruch 1, dadurch gekennzeichnet, daß eine Identifikationsschaltung vorgesehen ist, die das erste Halbbild und das zweite Halbbild erkennt.

3. Schaltungsanordnung nach Anspruch 2, dadurch gekennzeichnet, daß nach dem Schreiben des ersten Halbbildes ein Steuerimpuls von der Identifikationsschaltung abgegeben wird, der ein Stromtor (5) schaltet, über das der Bildlagestrom für das zweite Halbbild verändert wird, und daß nach dem Schreiben des zweiten Halbbildes ein weiterer Steuerimpuls das Stromtor sperrt.

4. Schaltungsanordnung nach einem der vorhergehenden Ansprüche, dadurch gekennzeichnet, daß in der Identifikationsschaltung (1 bis 4) die Vertikal- und Horizontalimpulse (H, V) an die Eingänge einer logischen UND-Schaltung (1) angelegt werden, und daß die Vertikalimpulse (V) zusätzlich eine monostabile Kippschaltung (3) steuern, die ein Tastsignal (M) erzeugt, das zeitlich länger ist als die Hinlaufzeit einer Halbzeile und zeitlich kürzer ist als die Dauer einer Zeilenperiode, und daß das Tastsignal an dem einen Eingang und das Ausgangssignal der ersten UND-Schaltung (1) an dem zweiten Eingang einer weiteren logischen UND-Schaltung (2) angelegt sind, welche zweite UND-Schaltung (2) Vertikalimpulse $M \wedge (H \wedge V)$ abgibt, die eine Flip-Flop-Schaltung (4) zurücksetzen, die von den synchronisierten Vertikalimpulsen (V) über einen ersten Eingang (Takt) gesteuert wird, und deren Ausgang mit einem elektronischen Schalter (5) verbunden ist, über den der Bildlagestrom durch Veränderung des Widerstandsverhältnisses des den Bildlagestrom bestimmenden Spannungsteilers (6, 7) während des zweiten Halbbildes derart verändert wird, daß die Zeilen des zweiten Halbbildes zur Deckung mit denen des ersten Halbbildes gelangen.

5. Schaltungsanordnung nach Anspruch 2 oder 3 in Verbindung mit einer Einblendschaltung, die einen Character Rounding Generator beinhaltet, der digitale Informationen so aufbereitet, daß rund erscheinende Symbole als geschlossene Symbole mit einer geschlossenen Linie erkennbar sind, welcher Character Rounding Generator Schaltmäander zur Ansteuerung der entsprechenden Bildhälfte abgibt, dadurch gekennzeichnet, daß der Character Rounding Generator als Identifikationsschaltung verwendet wird und daß der abgreifbare Schaltmäander den elektronischen Schalter (5) steuert.

6. Schaltungsanordnung nach Anspruch 5, dadurch gekennzeichnet, daß der Character Rounding Generator während der Einblendung von Symbolen von der Einblendschaltung abgetrennt ist.

7. Verfahren nach Anspruch 1 in Verbindung mit einer Schaltungsanordnung zur Durchführung des Verfahrens nach einem der Ansprüche 2 bis 6 in einem Fernsehempfangsgerät, das eine Empfängerschaltung für den Empfang von analogen Fernsehsignalen und zum Empfang von digitalen und codierten Signalen für die Darstellung von alphanumerischen Zeichen und graphischen Symbolen und zur Aufarbeitung dieser Signale enthält, dadurch gekennzeichnet, daß nur bei Empfang von digitalen Signalen das Verfahren Anwendung findet und die Schaltungen wirksam werden.

8. Schaltungsanordnung für die Durchführung eines Verfahrens nach Anspruch 7, dadurch gekennzeichnet, daß eine Schaltungsanordnung vorgesehen ist, die in Abhängigkeit von den empfangenen und zur Verarbeitung durchgeschalteten Signalen einen Schalter steuert, der die Schaltungsanordnung, die die Zeilenverschiebung der Zeilen des zweiten Halbbildes bewirkt, bei Empfang analoger Signale unwirksam schaltet.

9. Schaltungsanordnung nach Anspruch 8, dadurch gekennzeichnet, daß die Steuerung des Umschalters mittels eines vom Decoder für die Einblendung abgegriffenen Schaltsignals erfolgt.

**Claims**

1. Method for the elimination of the interline flicker in the representation of alpha-numeric characters and graphic symbols on a picture screen, particularly of a television receiver, in which a picture is reproduced by the half-line method in interlaced raster by two successively written half pictures each with a number of k + 1/2 lines in that the second half picture is brought by vertical displacement into registration with the first half picture, characterised thereby, that after the writing of the first half picture of k + 1/2 lines with initiation of the vertical flyback, a control circuit is activated, through which the vertical picture position current is varied in such a manner that the lines (k + 1/2) of the second half picture get into registration with the lines of the first half picture.

2. Circuit arrangement for the performance of a method according to claim 1, characterised thereby, that an identification circuit is provided, which recognises the first half picture and the second half picture.

3. Circuit arrangement according to claim 2, characterised thereby, that after the writing of the first half picture, a pulse is delivered by the identification circuit and switches a current gate (5), through which the picture position current for the second half picture is varied, and that a further control pulse blocks the current gate after the writing of the second half picture.

4. Circuit arrangement according to one of the preceding claims, characterised thereby, that the vertical and horizontal pulses (H, V) are applied in the identification circuit (1 to 4) to the inputs of a logic AND-circuit (1) and that the vertical pulses (V) additionally control a monostable relaxation oscillator (3), which generates a keying signal (M), which is longer in time than the forward sweep time of a half line and shorter in time than the duration of a line period, and that the keying signal is applied to the one input and the output signal of the first AND-circuit (1) is applied to the second input of a further logic AND-circuit (2), which second AND-circuit (2) delivers vertical pulses M ∧ (H ∧ V), which reset a flip-flop circuit (4), which is controlled through a first input (Takt) by the synchronised vertical pulses (V) and the output of which is connected with an electronic switch (5), through which the picture position current is varied in such a manner during the second half picture by variation of the resistance ratio of the voltage divider (6, 7) determining the picture position current that the lines of the second half picture get into registration with those of the first half picture.

5. Circuit arrangement according to claim 2 or 3 in combination with a mixing circuit which contains a character rounding generator which so processes digital informations that symbols appearing as round are recognisable as closed symbols with a closed line, which character rounding generator delivers switching meanders for the driving of the corresponding picture half, characterised thereby, that the character rounding generator is employed as identification circuit and that the tappable switching meander controls the electronic switch (5).

6. Circuit arrangement according to claim 5, characterised thereby, that the character rounding generator is separated from the mixing circuit during the fading-in of symbols.

7. Method according to claim 1 in combination with a circuit arrangement for the performance of the method according to one of the claims 2 to 6 in a television receiver which contains a receiver circuit for the reception of analog television signals and for the reception of digital and coded signals for the representation of alpha-numeric characters and graphic symbols and for the processing of these signals, characterised thereby, that the method finds application and the circuits become effective only on reception of digital signals.

8. Circuit arrangement for the performance of a method according to claim 7, characterised thereby, that a circuit arrangement is provided, which in dependence on the signals received and switched through for processing controls a switch which on the reception of analog signals renders ineffective the circuit arrangement effecting the line displacement of the second half picture.

9. Circuit arrangement according to claim 8, characterised thereby, that the control of the change-over switch takes place by means of a switching signal tapped off from the decoder for the fading-in.

**Revendications**

1. Procédé pour l'élimination du papillotement interligne lors de la présentation de signes alphanumériques et de symboles graphiques sur un écran d'un contrôleur, en particulier d'un récepteur de télévision, dans lequel une image est présentée selon le procédé demi-lignes en un canevas à entrelacement de lignes par deux demi-images écrites successivement, comportant chacune un nombre de lignes de k + 1/2, la deuxième demi-image étant amenée à coïncider avec la première par décalage vertical, caractérisé par le fait qu'après l'écriture de la première demi-image à k + 1/2 lignes, par l'amorçage du retour de trame, un circuit de commande est sélectionné par l'intermédiaire duquel le courant de position d'image est modifié de telle sorte que les lignes (k + 1/2) de la deuxième demi-image arrivent à coïncider avec les lignes de la première demi-image.

2. Disposition de circuits pour la mise en œuvre

d'un procédé selon la revendication 1, caractérisée par le fait qu'il est prévu un circuit d'identification qui reconnaît la première demi-image et la deuxième demi-image.

3. Disposition de circuits selon la revendication 2, caractérisée par le fait qu'après l'écriture de la première demi-image, le circuit d'identification émet une impulsion de commande qui manœuvre une porte de courant (5) par l'intermédiaire de laquelle le courant de position d'image de la deuxième demi-image est modifié et qu'après l'écriture de la deuxième demi-image, une autre impulsion de commande bloque la porte de courant.

4. Disposition de circuits selon l'une des revendications précédentes, caractérisée par le fait que dans le circuit d'identification (1 à 4), les impulsions verticales et horizontales (H, V) sont appliquées aux entrées d'un circuit logique ET (1) et que les impulsions verticales (V) commandent en outre une bascule monostable (3) qui engendre un signal d'exploration qui a une durée plus longue que le temps d'aller d'une demi-ligne et qui a une durée plus courte que la durée d'une période de ligne, et que le signal d'exploration est appliqué à l'une des entrées et le signal de sortie du premier circuit ET (1) à la deuxième entrée d'un autre circuit logique ET (2), ce deuxième circuit logique ET (2) émettant des impulsions verticales M ∧ (H ∧ V) qui réarment une bascule (4) qui est commandée par les impulsions verticales synchronisées (V) par l'intermédiaire d'une première entrée (rythme) et dont la sortie est reliée à un commutateur électronique (5) par l'intermédiaire duquel le courant de position d'image est modifié, pendant la deuxième demi-image, par modification du rapport de résistances du diviseur de tension (6, 7) qui détermine le courant de position d'image, de telle sorte que les lignes de la deuxième demi-image arrivent à coïncider avec celles de la première demi-image.

5. Disposition de circuits selon l'une des revendications 2 et 3, en combinaison avec un circuit de surimpression qui comporte un générateur d'arrondissement de caractères qui prépare des informations numériques de telle sorte que des symboles apparaissant ronds sont reconnaissables comme des symboles fermés présentant une ligne fermée, ce générateur d'arrondissement de caractère émettant des méandres de commutation pour sélectionner la moitié d'image correspondante, caractérisée par le fait que l'on utilise le générateur d'arrondissement de caractères comme circuit d'identification et que le méandre de commutation pouvant être saisi commande le commutateur électronique (5).

6. Dispositif de circuits selon la revendication 5, caractérisé en ce que le générateur d'arrondissement de caractères est séparé du circuit de surimpression pendant la surimpression de symboles.

7. Procédé selon la revendication 1, en combinaison avec une disposition de circuits pour la mise en œuvre du procédé selon l'une des revendications 2 à 6, dans un récepteur de télévision qui comporte un circuit de récepteur pour la réception de signaux analogiques de télévision et pour la réception de signaux numériques et codés en vue de la représentation de signes alphanumériques et de symboles graphiques et pour le traitement de ces signaux, caractérisé par le fait que, seulement lors de la réception de signaux numériques, on applique le procédé, et les circuits entrent en action.

8. Disposition de circuits pour la mise en œuvre d'un procédé selon la revendication 7, caractérisée par le fait qu'il est prévu une disposition de circuits qui, sous la dépendance des signaux reçus et acheminés pour le traitement, commande un commutateur qui rend inactive, lors de la réception de signaux analogiques, la disposition de circuits qui assure le décalage de lignes de la deuxième demi-image.

9. Disposition de circuits selon la revendication 8, caractérisée par le fait que la commande du commutateur s'effectue au moyen d'un signal de manœuvre tiré du décodeur affecté à la surimpression.

**Figur 1**

**Figur 2**

**0 030 654**

Figur 1a

## Figur 2a